# EUROPÄISCHE PATENTANMELDUNG

(11) **EP 0 802 499 A2**
(43) Veröffentlichungstag der Anmeldung: **22.10.1997**
(21) Anmeldenummer: 97105998.5
(22) Anmeldetag: 11.04.1997
(51) Int. Cl.: G06K 7/12

(54) **Lumineszenztaster**

(30) Priorität: 18.04.1996 DE 29607075 U
(71) Anmelder: SICK AG, 79183 Waldkirch (DE)
(72) Erfinder: Hirt, Günter, D-77716 Haslach (DE); Mildenberger, Klaus, D-79211 Denzlingen (DE)
(74) Vertreter: Finsterwald, Martin, Dr.

(57) **Zusammenfassung**

Es wird ein Lumineszenztaster zur Erkennung von lumineszierenden Gegenständen beschrieben. Der Lumineszenztaster umfaßt zumindest einen Sender zum Aussenden von im UV-Bereich liegenden Lichtsignalen in einen Überwachungsbereich, zumindest einen Empfänger zum Empfangen der an einem im Überwachungsbereich angeordneten Gegenstand reflektierten, im sichtbaren Bereich liegenden Lichtsignale sowie zumindest eine Auswerteeinheit zur Auswertung der Empfangssignale. Der Sender des Lumineszenztasters ist dabei als Halbleiterelement ausgebildet.

## Beschreibung

Die vorliegende Erfindung betrifft einen Lumineszenztaster zur Erkennung von lumineszierenden Gegenständen.

Mit Lumineszenztastern können Materialien erkannt werden, die natürliche oder künstliche Luminophore enthalten. Beispielsweise kann ein zu erkennender Gegenstand mit einer lumineszierenden Prüfmarke versehen werden, so daß der Gegenstand ein lumineszierendes Zielobjekt bildet. Durch den Lumineszenztaster werden im UV-Bereich liegende Lichtsignale in Richtung des lumineszierenden Zielobjekts ausgesandt, von diesem absorbiert und als langwellige Strahlung wieder abgestrahlt. Die Absorption der im UV-Bereich liegenden Lichtsignale sowie die sich daran anschließende Abstrahlung langwelliger Strahlung wird in dieser Anmeldung vereinfacht auch als Reflexion bezeichnet.

Bei dieser Reflexion bzw. Lumineszenz werden die im UV-Bereich von 300 bis 390 nm liegenden, ausgesandten Lichtsignale in sichtbares Licht von circa 390 bis 770 nm umgewandelt, so daß sie von einem auf sichtbares Licht ansprechenden Empfänger empfangen werden können.

Beim Erkennen eines Empfangssignals wird durch eine an den Empfänger angeschlossene Auswerteeinheit ein Gegenstandfeststellungssignal erzeugt, so daß ein in einen Überwachungsbereich eintretendes lumineszierendes Zielobjekt erkannt werden kann.

Der Vorteil von Lumineszenztastern gegenüber üblichen Lichttastern liegt darin, daß der Empfänger nicht auf die vom Sender ausgesandten UV-Lichtsignale anspricht und somit eine Beeinflussung des Empfängers durch direkt vom Sender ausgesandte Lichtsignale nicht erfolgen kann.

Nachteilig an den bekannten Lumineszenztastern ist, daß als UV-Strahlungsquelle Niederdruck- bzw. Hochdruckquecksilberdampflampen eingesetzt werden. Diese Quecksilberdampflampen besitzen zum einen eine relativ geringe Lebensdauer und sind darüber hinaus empfindlich gegenüber mechanischen Belastungen, wie beispielsweise Vibrationen oder große Beschleunigungen. Weiterhin besitzen die Hochdruckquecksilberdampflampen relativ große Abmessungen und erzeugen hohe Temperaturen, so daß sie zum einen bei beengten Raumverhältnissen und zum anderen bei temperaturkritischen Anwendungsfällen nicht eingesetzt werden können. Darüber hinaus ist der Aufwand zur Ansteuerung dieser Strahlungsquellen relativ hoch.

Ein weiterer Nachteil derartiger bekannter Lumineszenztaster liegt darin, daß sie relativ große Ansprechzeiten besitzen, so daß ein Pulsbetrieb mit schnellen Ansteuersignalen, der eine Erhöhung der Störsicherheit mit sich bringt, mit diesen Quecksilberdampflampen nicht realisiert werden kann.

Aufgabe der Erfindung ist es, einen Lumineszenztaster zur Erkennung von lumineszierenden Gegenständen anzugeben, der eine hohe Lebensdauer bei gleichzeitiger Unempfindlichkeit gegen mechanische Einwirkung besitzt und auch bei temperaturkritischen Anwendungen einsetzbar ist. Weiterhin soll der Lumineszenztaster platzsparend und störstrahlungssicher ausgebildet sein.

Gelöst wird diese Aufgabe nach der Erfindung durch einen Lumineszenztaster mit zumindest einem Sender zum Aussenden von im UV-Bereich liegenden Lichtsignalen in einen Überwachungsbereich, mit zumindest einem Empfänger zum Empfangen der an einem im Überwachungsbereich angeordneten Gegenstand reflektierten, im sichtbaren Bereich liegenden Lichtsignale sowie mit zumindest einer Auswerteeinheit zur Auswertung der Empfangssignale, wobei der Sender als Halbleiterelement ausgebildet ist.

Durch die Ausbildung des Senders als Halbleiterelement ist eine bauliche Ausgestaltung eines erfindungsgemäß ausgebildeten Lumineszenztasters mit sehr geringen Abmessungen möglich. Weiterhin sind Halbleiterelemente deutlich robuster als die bisher verwendeten Quecksilberdampflampen und damit insbesondere unempfindlicher gegen mechanische Vibrationen, hohe mechanische Beschleunigungswerte oder sonstige mechanische Beanspruchungen. Darüber hinaus ist der Aufwand für die Ansteuerung der Halbleiterelemente deutlich geringer als der für die Ansteuerung der Quecksilberdampflampen erforderliche Aufwand.

Weiterhin weisen Halbleiterelemente auch bei normaler Beanspruchung eine deutlich höhere Lebensdauer auf als Quecksilberdampflampen, so daß ein erfindungsgemäß ausgebildeter Lumineszenztaster eine höhere durchschnittliche Lebenserwartung besitzt als ein herkömmlicher Lumineszenztaster.

Da Halbleiterelemente im Vergleich zu Quecksilberdampflampen in einem großen Temperaturbereich problemlos arbeiten und darüber hinaus ein sehr kurzes Ansprechverhalten besitzen, ist der Einsatz eines erfindungsgemäß ausgebildeten Lumineszenztasters sowohl bei tiefen Temperaturen ohne aufwendige Heizvorrichtung als auch im Pulsbetrieb oder in einem sonstigen Modulationsbetrieb möglich, so daß eine erhöhte Störstrahlungssicherheit erreicht werden kann.

Nach einer weiteren vorteilhaften Ausführungsform der Erfindung ist das Halbleiterelement als Diode ausgebildet, bei der zumindest ein Teil des ausgesandten Lichts im UV-Bereich liegt. Die Diode kann dabei entweder als UV-Strahlung abgebende Diode oder als eine beispielsweise im sichtbaren Bereich liegendes Licht aussendende Diode ausgebildet sein, die neben sichtbarem Licht auch UV-Licht aussendet. Vorteilhaft ist das Halbleiterelement als blaues Licht aussendende Diode ausgebildet, deren abgegebene Strahlung neben einem blauen, im sichtbaren Bereich angeordneten Strahlungsanteil auch einen im UV-Bereich angeordneten Strahlungsanteil enthält.

Nach einer weiteren bevorzugten Ausführungsform der Erfindung sind mehrere Halbleiterelemente zur Bildung mehrerer Sender vorgesehen. Dadurch kann die Abstrahlleistung eines erfindungsgemäß ausgebildeten Lumineszenztasters erhöht werden. Grundsätzlich kann jedoch auch ein einzelnes Halbleiterelement verwendet werden, wenn die von diesem Element erzeugte Abstrahlleistung ausreichend hoch ist. Die abgestrahlten Lichtsignale können dabei durch ein optisches Element, wie beispielsweise eine Linse, insbesondere eine Zylinderlinse auf den zu erkennenden Gegenstand konzentriert werden, um auf diese Weise die reflektierte Lichtmenge zu erhöhen.

Vorteilhaft sind die Sender in einer oder mehreren Reihen im wesentlichen nebeneinanderliegend angeordnet, so daß ein einfacher Aufbau eines erfindungsgemäß ausgebildeten Lumineszenztasters erreicht wird. Beispielsweise ist die Ausbildung eines Dioden-Arrays auf einem einzigen Chip möglich. Grundsätzlich können die Sender jedoch in beliebiger Weise angeordnet sein, so daß eine beliebige Form des auf dem zu erkennenden Gegenstand auftreffenden Lichtbündels erreicht werden kann.

Nach einer weiteren vorteilhaften Ausführungsform der Erfindung sind Sender und Empfänger optisch voneinander entkoppelt, insbesondere in zwei unterschiedlichen Tuben angeordnet. Auf diese Weise wird eine Beeinflussung des Empfängers durch von dem Sender ausgehende Störstrahlung weitgehend vermieden. Dies ist insbesondere dann wichtig, wenn der Sender neben den UV-Lichtsignalen auch Lichtsignale im sichtbaren Bereich aussendet, welche von dem Empfänger empfangen und fälschlicherweise als Reflexionen an einem zu erkennenden Gegenstand gedeutet werden können.

Durch die Anordnung des Empfängers in einem Tubus wird erreicht, daß beispielsweise seitlich von außen in den Lumineszenztaster eindringendes Störlicht an den Innenseiten des Tubus weitgehend absorbiert wird und somit nicht bis zum Empfänger gelangt, wo es ein fehlerhaftes Gegenstandsfeststellungssignal auslösen könnte. Die Unterbringung des Senders in einem separaten Tubus hat den Vorteil, daß die vom Sender abgegebenen Lichtsignale ausschließlich in die gewünschte, vorgegebene Richtung ausgesandt werden und keine, beispielsweise aufgrund eines großen Abstrahlwinkels erzeugten Störstrahlen den Empfänger erreichen können.

Nach einer weiteren bevorzugten Ausführungsform der Erfindung ist außerhalb des Hauptstrahlenwegs des Senders ein Referenzempfänger zum Empfangen der vom Sender seitlich abgestrahlten Lichtsignalanteile angeordnet, wobei der Referenzempfänger insbesondere zum Empfangen von UV-Licht ausgebildet ist. Durch die Verwendung eines Referenzempfängers können Unregelmäßigkeiten in der vom Lumineszenztaster abgegebenen Lichtintensität, wie sie beispielsweise aufgrund von Temperaturschwankungen, Alterung der Sendeelemente oder Unregelmäßigkeiten in der Spannungsversorgung der Sendeelemente auftreten können, kompensiert werden.

Bevorzugt ist der Referenzempfänger innerhalb eines insbesondere verspiegelten Reflektors angeordnet, der mit dem Sendertubus in Verbindung steht, so daß die vom Sender seitlich abgestrahlten Lichtsignalanteile auf den Referenzempfänger konzentriert werden. Dadurch wird dem Referenzempfänger auch bei geringer seitlicher Abstrahlung der Sendeelemente eine ausreichende Lichtmenge zugeführt, so daß eine Kompensation der beschriebenen Unregelmäßigkeiten in der Sendeintensität möglich ist.

Ein anderer erfindungsgemäß ausgebildeter Lichttaster zum Erkennen von inbesondere lumineszierenden Gegenständen umfaßt zumindest einen Sender zum Aussenden von insbesondere im UV-Bereich liegenden Lichtsignalen in einen Überwachungsbereich, zumindest einen Empfänger zum Empfangen, der an einem im Überwachungsbereich angeordneten Gegenstand reflektierten Lichtsignale, zumindest eine Auswerteeinheit zur Auswertung der Empfangssignale sowie eine optische Einheit zur insbesondere automatischen variablen Fokussierung der ausgesandten Lichtsignale auf verschiedene Punkte innerhalb des Überwachungsbereichs und/oder eine optische Einheit mit insbesondere automatisch verstellbarer Brennweite.

Der erfindungsgemäß ausgebildete Lichttaster kann sehr flexibel eingesetzt werden, da durch die unterschiedlich einstellbaren Brennweiten innerhalb des Überwachungsbereichs unterschiedliche Tastweiten realisiert werden können. Die unterschiedlichen Brennweiten können dabei beispielsweise durch ein Zoom-Objektiv kontinuierlich einstellbar sein oder aus einer vorgegebenen Anzahl von Brennweitenstufen, von denen jede einer bestimmten Tastweite entspricht, ausgewählt werden.

Bei Verwendung eines insbesondere automatischen Fokussier-Objektivs werden erfindungsgemäß bei einer Reflexion der ausgesandten Lichtsignale an einem zu erkennenden Gegenstand die Empfangssignale auf den Empfänger konzentriert und somit die Empfangssignalintensität erhöht, so daß auch bei Sendern mit relativ geringer Sendeleistung eine einwandfreie Erkennung der lumineszierenden Zielobjekte möglich ist.

Weitere vorteilhafte Ausführungsformen der Erfindung sind in den Unteransprüchen angegeben.

Die Erfindung wird im folgenden anhand eines Ausführungsbeispiels unter Bezugnahme auf die Zeichnungen näher erläutert; in diesen zeigen:
- Fig. 1: einen schematischen Querschnitt durch einen erfindungsgemäß ausgebildeten Lumineszenztaster,
- Fig. 2: eine Teilansicht eines erfindungsgemäß ausgebildeten Lumineszenztasters,
- Fig. 3: die Teilansicht nach Fig. 2 aus einem anderen Blickwinkel, und
- Fig. 4: eine schematisch dargestellte Draufsicht auf einen Referenzempfänger mit Reflektor nach den Figuren 2 und 3.

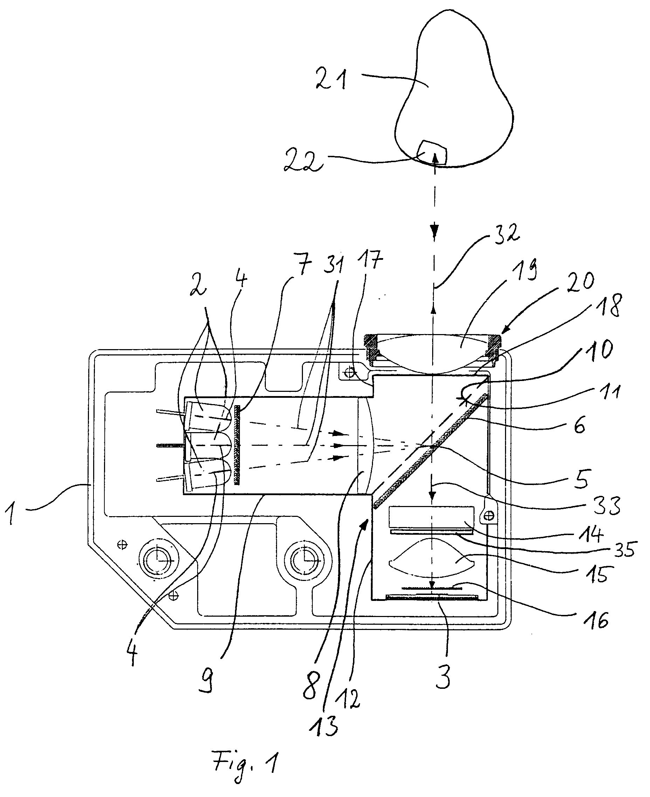

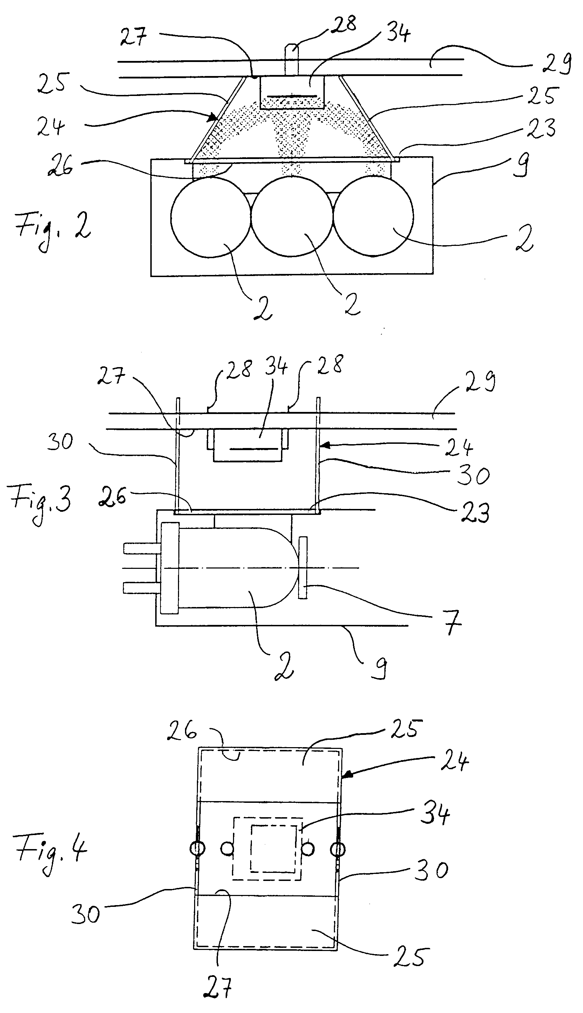

Der in Fig. 1 dargestellte Lumineszenztaster umfaßt ein Gehäuse 1, in dem drei als Dioden 2 ausgebildete Sendeelemente sowie ein Empfänger 3 angeordnet sind.

Die Dioden 2 senden sowohl sichtbares blaues Licht als auch UV-Licht aus und sind in einer Reihe nebeneinanderliegend so angeordnet, daß sich ihre optischen Achsen 4, entlang derer jeweils der größte Lichtanteil ausgestrahlt wird, in einem Punkt 5 an der Oberfläche eines Strahlenteilerspiegels 6 schneiden.

Zwischen den Dioden 2 und dem Strahlenteilerspiegel 6 sind ein Präzisionskantenfilter 7 und eine Linse 8 angeordnet.

Die Dioden 2, das Präzisionskantenfilter 7 und die Linse 8 sind in einem Sendertubus 9 angeordnet, der einen rechteckigen Querschnitt aufweist, wie es aus Fig. 2 ersichtlich ist.

Der Sendertubus 9 besitzt an seinem von den Dioden 2 abgewandten Ende eine gestrichelt dargestellte Gehrungskante 10, die an einer entsprechenden Gehrungskante 11 eines Empfängertubus 12 bündig anliegt. Der Sendertubus 9 und der Empfängertubus 12 sind über nicht dargestellte Rastelement miteinander verbunden, so daß ein aus dem Sendertubus 9 und dem Empfängertubus 12 bestehender Gesamttubus 13 entsteht. Grundsätzlich können der Sendertubus 9 und der Empfängertubus 12 auch auf andere Weise miteinander verbunden, beispielsweise miteinander verklebt oder verschraubt oder aus einem einzigen Stück hergestellt sein.

Im wesentlichen parallel zu der Gehrungskante 11 ist in dem Empfängertubus 12 der Strahlenteilerspiegel 6 angeordnet, während der Empfänger 3 an dem anderen Ende des Empfängertubus 12 vorgesehen ist. Zwischen dem Strahlenteilerspiegel 6 und dem Empfänger 3 sind in dem Empfängertubus 12 ein weiteres Präzisionskantenfilter 14, ein Zusatzfilter 35, eine Empfängerlinse 15 sowie ein Filter 16 für nahes Infrarot angeordnet.

Der Sendertubus 9 besitzt an seinem von den Dioden 2 abgewandten Ende einen seitlichen Ansatz 17, der im wesentlichen als Verlängerung des mit dem Sendertubus 9 verbundenen Empfängertubus 12 ausgebildet ist. Der seitliche Ansatz 17 besitzt eine Öffnung 18, vor der ein eine Linse 19 umfassendes Objektiv 20 angeordnet ist.

Weiterhin ist in Fig. 1 ein zu erkennender Gegenstand 21 abgebildet, an dem eine lumineszierende Prüfmarke 22 angeordnet ist.

Aus der in Fig. 2 dargestellten Vorderansicht der in einer Reihe nebeneinanderliegend angeordneten Dioden 2 ist die rechteckige Querschnittsform des Sendertubus 9 zu erkennen. Der Sendertubus 9 besitzt an seiner Oberseite eine Lichtaustrittsöffnung 23, die von einem Reflektor 24 mit schräg verlaufenden Seitenwänden 25 überdeckt ist.

Der Reflektor 24 besitzt an seiner Unterseite eine Lichteintrittsöffnung 26 und an seiner Oberseite eine Empfängeraufnahmeöffnung 27, durch die ein Referenzempfänger 34 in den Reflektor 24 eingesetzt ist. Der Referenzempfänger 34 besitzt Kontaktelemente 28, mit der er an einer Leiterplatte 29 verlötet ist.

Während die in Fig. 2 dargestellten Seitenwände 25 des Reflektors 24 schräg nach oben zulaufend ausgebildet sind, sind die beiden anderen Seitenwänden 30 des Reflektors 24 parallel zueinander und im wesentlichen senkrecht zu der Leiterplatte 29 und der Längsachse des Empfängertubus 9 angeordnet, wie es der Fig. 3 zu entnehmen ist.

Aus der in Fig. 4 dargestellten Draufsicht auf den Reflektor 24 ist der rechteckförmige Querschnitt des Reflektors 24 sowie der Lichteintrittsöffnung 26 und der Empfängeraufnahmeöffnung 27 zu erkennen. Insbesondere ist aus Fig. 4 auch ersichtlich, daß die Lichteintrittsöffnung 26 eine größere Fläche als die Empfängeraufnahmeöffnung 27 besitzt.

Während die Unterseite des Reflektors 24 mit dem Sendertubus 9 fest verbunden, beispielsweise verklebt oder verrastet ist, wird die Oberseite des Reflektors bei der Herstellung des erfindungsgemäß ausgebildeten Lumineszenztasters einfach auf die Leiterplatte 29 aufgesetzt, so daß sich der Referenzempfänger 34 im Inneren des Reflektors 24 befindet. Dabei liegen die die Empfängeraufnahmeöffnung 27 des Reflektors 24 begrenzenden Kanten der Seitenwände 25 und 30 lediglich an der Oberfläche der Leiterplatte 29 an, so daß im Bedarfsfall eine rasche Auswechslung des Referenzempfängers 34 möglich ist. Auf diese Weise ist eine sehr einfache und kostengünstige Herstellung des erfindungsgemäß ausgebildeten Lumineszenztasters möglich.

Im folgenden wird die Funktionsweise eines erfindungsgemäß ausgebildeten Lumineszenztasters näher beschrieben:

Das von den Dioden 2 im wesentlichen entlang ihrer jeweiligen optischen Achsen 4 ausgestrahlte Licht, welches beispielsweise sowohl einen im sichtbaren Bereich liegenden Blau-Anteil als auch einen UV-Anteil enthält, wird durch das Präzisionskantenfilter 7 und die Linse 8 auf den Punkt 5 des Strahlenteilerspiegels 6 konzentriert. Dabei werden durch das Präzisionskantenfilter 7 die im sichtbaren Bereich liegenden Strahlungsanteile weitgehend ausgefiltert, so daß die durch die Linse 8 auf den Strahlenteilerspiegel 6 auftreffenden Lichtsignale 31 im wesentlichen lediglich aus UV-Strahlung bestehen.

Durch den Sendertubus 9, der eine Licht absorbierende Innenfläche besitzt, wird verhindert, daß von außen eindringende Störsignale beispielsweise Störreflexionen auf der Linse 8 oder auf dem Präzisionskantenfilter 7 erzeugen bzw. daß unerwünschte, seitlich von den Dioden 2 abgestrahlte Lichtsignale beispielsweise an dem Präzisionskantenfilter 7 vorbei zum Strahlenteilerspiegel 6 abgestrahlt werden.

Der Strahlenteilerspiegel 6 besitzt für Strahlung im UV-Bereich eine hohe Re£lektivität, so daß die auf ihn auftreffenden Lichtsignale 31 im wesentlichen vollständig reflektiert und entlang der optischen Achse 32 durch die Linse 19 des Objektivs 20 aus dem Gehäuse 1 des Lumineszenztasters in den Überwachungsbereich austreten.

Befindet sich ein zu erkennender Gegenstand 21 mit einem lumineszierenden Abschnitt 22 bzw. ein vollständig lumineszierenden Gegenstand 21 im Überwachungsbereich, so werden die ausgesandten Lichtsignale an dem lumineszierenden Zielobjekt 22 reflektiert und durch die Reflexion in sichtbare Lichtsignale umgewandelt.

Die reflektierten Lichtsignale treten durch die Linse 19 des Objektivs 20 in das Gehäuse 1 des Lumineszenztasters ein, treffen auf den Strahlenteilerspiegel 6 und durchdringen diesen entlang des Pfeils 33, da der Strahlenteilerspiegel 6 für sichtbares Licht eine hohe Durchlässigkeit besitzt. Die reflektierten Empfangssignale treffen auf das Präzisionskantenfilter 14, mit dem zum einen in den reflektierten Empfangssignalen vorhandene UV-Reststrahlung und zum anderen direkt von den Dioden 2 stammende, den Strahlenteilerspiegel 6 durchdringende UV-Strahlung ausgefiltert wird.

Die von UV-Reststrahlung bereinigten Empfangssignale treffen anschließend auf das Zusatzfilter 35, das als Bandpaß abhängig von den Eigenschaften des lumineszierenden Zielobjekts 22 ausgebildet ist. Beispielsweise können die Wellenlängen der an dem lumineszierenden Zielobjekt 22 reflektierten Lichtsignale im Bereich zwischen 400 und 750 nm, zwischen 610 und 750 nm oder zwischen 500 und 520 nm je nach Ausbildung des lumineszierenden Zielobjekts 22 liegen. Dementsprechend kann durch Wahl eines geeigneten Zusatzfilters 35 der Störlichtempfang reduziert werden.

Um eine weitere Verbesserung der Fremdlichtempfindlichkeit zu erhalten, werden die durch eine Empfängerlinse 15 gebündelten Empfangslichtsignale durch das NIR-Sperrfilter 16 von Infrarot-Störstrahlung befreit.

Die somit weitgehend von Störstrahlungen bereinigten Empfangssignale treffen auf den Empfänger 3, der die auftreffenden Lichtsignale erkennt und den Pegel der erkannten Empfangslichtsignale an eine nicht dargestellte Auswerteschaltung weiterleitet. Überschreitet der Empfangspegel einen vorgegebenen Schwellenwert, so erzeugt die Auswerteschaltung ein Gegenstandsfeststellungssignal, woraufhin eine gewünschte Aktion ausgeführt wird.

Liegt der vom Empfänger 3 gelieferte Empfangspegel unterhalb des vorgegebenen Schwellenwertes, so bedeutet dies, daß von dem Lumineszenztaster kein Gegenstand innerhalb des Überwachungsbereichs erkannt wird.

Durch den in den Fig. 2 bis 4 dargestellten Referenzempfänger 34 können Abweichungen in der Sendeleistung der Dioden 2, wie sie beispielsweise durch Alterung, Temperaturschwankungen, Unregelmäßigkeiten in der Spannungsversorgung und sonstige äußere Einflüsse entstehen können, kompensiert werden.

Dazu werden die von den Dioden 2 seitlich abgegebenen und durch die an der Oberseite des Sendertubus 9 vorgesehene Lichtaustrittsöffnung 23 austretenden Lichtsignale von dem Referenzempfänger 34 empfangen und an die Auswerteschaltung weitergeleitet. Da die geometrische Form der Dioden 2 einen relativ kleinen Abstrahlwinkel in Richtung ihrer optischen Achsen 4 zur Folge hat, so daß mehr als 95% der gesamten Abstrahlleistung in Richtung der optischen Achsen 4 ausgestrahlt werden, ist der seitlich abgestrahlte Lichtanteil der Dioden 2 relativ gering. Daher wird das seitlich abgestrahlte Licht durch den Reflektor 24 auf den Referenzempfänger 34 konzentriert, wie es in Fig. 2 dargestellt ist, so daß eine für die Auswertung ausreichende Lichtmenge auf den Referenzempfänger 34 auftrifft.

Durch den Referenzempfänger 34 wird abhängig von der empfangenen Lichtmenge ein Referenzpegel erzeugt, der zur Festlegung des Schwellenwerts innerhalb der Auswerteschaltung zur Erkennung eines Gegenstands 21 im Überwachungsbereich verwendet werden kann. Sinkt beispielsweise aufgrund von Alterung oder Temperaturschwankungen die von den Dioden 2 abgegebene Lichtmenge und damit der von dem Referenzempfänger 34 erzeugte Referenzpegel, so wird der in der Auswerteschaltung verwendete Schwellenwert entsprechend herabgesetzt. Obwohl bei einer Abnahme der Intensität der von den Dioden 2 ausgesandten Lichtsignale auch die Intensität der aufgrund dieser Lichtsignale von einem lumineszierenden Zielobjekt abgestrahlten Lichtsignale verringert ist, wird durch die Reduzierung des Schwellenwert innerhalb der Auswerteschaltung weiterhin ein in den Überwachungsbereich eintretendes lumineszierendes Zielobjekt zuverlässig erkannt.

Der Referenzempfänger 34 kann in einer anderen Ausführungsform der Erfindung statt zur Ansteuerung der Auswerteschaltung zur Ansteuerung der Dioden 2 verwendet werden. Sinkt die von den Dioden 2 abgegebene Lichtmenge und damit der von dem Referenzempfänger 34 erzeugte Referenzpegel, so kann aufgrund des verringerten Referenzpegels die Ansteuerung der Dioden 2 beispielsweise so lange erhöht werden, bis der Referenzpegel wieder dem gewünschten, vorgegebenen Wert entspricht.

In einer weiteren Ausführungsform der Erfindung kann das Objektiv 20 unterschiedliche Brennweiten aufweisen, so daß unterschiedliche Tastweiten realisiert werden können. Dazu kann das Objektiv 20 beispielweise auswechselbar oder als Zoom-Objektiv ausgebildet sein, so daß auch ohne Auswechseln des Objekts 20 die Realisierung von unterschiedlichen Tastweiten möglich ist. Das Zoom-Objektiv kann dabei kontinuierlich oder beispielsweise gerastert in diskreten Schritten verstellbar sein.

Weiterhin kann das Objektiv 20 zusätzlich zur oder anstelle der variablen Brennweiteneinstellung eine manuelle oder automatische Fokussierung ermöglichen, insbesondere eine Autofokusvorrichtung umfassen, so daß die Sendelichtsignale bzw. die Empfangslichtsignale auf das zu erkennende lumineszierende Zielobjekt bzw. auf den Empfänger 3 fokussiert werden können. Damit kann eine weitere Verbesserung des Störlichtabstandes erreicht werden.

Alle beschriebenen, nicht auf die Verwendung von UV-Licht beschränkten Merkmale, wie beispielsweise die Verwendung eines fokussierbaren, eines austauschbaren oder eines Objektivs mit variabler Brennweite oder die Anordnung eines Referenzempfängers sind auch bei einem Lichttaster, der mit Lichtsignalen außerhalb des UV-Bereichs, beispielsweise im sichtbaren oder im Infrarot-Bereich arbeitet, kombinierbar.

## Patentansprüche

1. Lumineszenztaster zur Erkennung von lumineszierenden Gegenständen (21, 22) mit zumindest einem Sender (2) zum Aussenden von im UV-Bereich liegenden Lichtsignalen in einen Überwachungsbereich, mit zumindest einem Empfänger (3) zum Empfangen der an einem im Überwachungsbereich angeordneten Gegenstand (21, 22) reflektierten, im sichtbaren Bereich liegenden Lichtsignale sowie mit zumindest einer Auswerteeinheit zur Auswertung der Empfangssignale, wobei der Sender (2) als Halbleiterelement ausgebildet ist.

2. Lumineszenztaster nach Anspruch 1,
dadurch **gekennzeichnet,**
daß das Halbleiterelement (2) als Diode ausgebildet ist, bei der zumindest ein Teil des ausgesandten Lichts im UV-Bereich liegt, und/oder daß das Halbleiterelement (2) als blaues Licht aussendende Diode oder als UV-Strahlung abgebende Diode, insbesondere als UV-Laserdiode ausgebildet ist, und/oder daß mehrere, insbesondere mindestens drei Halbleiterelemente (2) zur Bildung eines Senders vorgesehen sind.

3. Lumineszenztaster nach einem der vorhergehenden Ansprüche,
dadurch **gekennzeichnet,**
daß die Sender (2) in einer Reihe oder mehreren nebeneinanderliegenden Reihen angeordnet sind, und/oder daß Sender (2) und Empfänger (3) optisch voneinander entkoppelt sind, und/oder daß der bzw. die Sender (2) in einem Tubus (9) zur Unterdrückung von Störstrahlung angeordnet ist bzw. sind, und/oder daß der bzw. die Empfänger (3) in einem Tubus (12) zur Unterdrückung von Störstrahlung angeordnet ist bzw. sind.

4. Lumineszenztaster nach einem der vorhergehenden Ansprüche,
dadurch **gekennzeichnet,**
daß Sender (2) und Empfänger (3) in zwei unterschiedlichen Tuben (9, 12) angeordnet sind, wobei insbesondere die beiden Tuben (9, 12) miteinander verbunden, insbesondere miteinander verrastet sind.

5. Lumineszenztaster nach Anspruch 4,
dadurch **gekennzeichnet,**
daß die Längsachsen der beiden Tuben (9, 12) im wesentlichen senkrecht zueinander angeordnet sind, und/oder daß die beiden Tuben (9, 12) einen im wesentlichen L-förmigen Gesamttubus (13) bilden, wobei der Sender (2) in dem einen und der Empfänger (3) in dem anderen Schenkel (9, 12) des L-förmigen Gesamttubus (13) angeordnet ist, und daß im Bereich der Verbindungsstelle zwischen den beiden Tuben (9, 12) eine Lichtein- und -austrittsöffnung (18) vorgesehen ist, und/oder daß die beiden Tuben (9, 12) einen im wesentlichen T-förmigen Gesamttubus (13) bilden, wobei der Sender (2) in dem das Basiselement und der Empfänger (3) in dem das Querelement des T-förmigen Gesamttubus (13) bildenden Tubus (9, 12) angeordnet ist, und daß an dem das Querelement bildenden Tubus (12) dem Empfänger (3) im wesentlichen gegenüberliegend eine Lichtein- und -austrittsöffnung (18) vorgesehen ist, und/oder daß die beiden Tuben (9, 12) einen im wesentlichen T-förmigen Gesamttubus (13) bilden, wobei der Empfänger (3) in dem das Basiselement und der Sender (2) in dem das Querelement des T-förmigen Gesamttubus (13) bildenden Tubus (9, 12) angeordnet ist, und daß an dem das Querelement bildenden Tubus dem Sender (2) im wesentlichen gegenüberliegend eine Lichtein- und -austrittsöffnung (18) vorgesehen ist.

6. Lumineszenztaster nach einem der vorhergehenden Ansprüche,
dadurch **gekennzeichnet,**
daß sendeseitig und/oder empfangsseitig zumindest ein Filter (7, 14, 35, 16), insbesondere ein Infrarot-Filter (16) und/oder ein UV-Filter (14), zur Unterdrückung von Störstrahlung vorgesehen ist, wobei insbesondere die Filter (7, 14, 35, 16) als Präzisionskantenfilter ausgebildet sind, und/oder daß im optischen Sende- und Empfangsweg, insbesondere im Bereich der Verbindungsstelle zwischen den beiden Tuben (9, 12) ein dichroitischer Teiler, insbesondere in Form eines Strahlenteilerspiegels (6) angeordnet ist, der eine hohe Reflektivität für UV-Licht und eine hohe Durchlässigkeit für sichtbares Licht bzw. eine hohe Durchlässigkeit für UV-Licht und eine hohe Reflektivität für sichtbares Licht besitzt, wobei insbesondere der Reflexionsanteil des Strahlenteilerspiegels (6) im UV-Bereich größer als 80%, insbesondere größer als 90%, bevorzugt größer als 95% ist, und/oder der Transmissionsanteil des Strahlenteilerspiegels (6) im Bereich des sichtbaren Lichts größer als 70%, insbesondere größer als 80%, bevorzugt größer als 85% ist.

7. Lumineszenztaster nach einem der vorhergehenden Ansprüche,
dadurch **gekennzeichnet,**
daß der Abstrahlwinkel der Sender (2) kleiner als 70°, insbesondere kleiner als 50°, bevorzugt kleiner als 30° ist, und/oder daß außerhalb des Hauptstrahlenwegs des Senders (2) ein Referenzempfänger (34) zum Empfangen der vom Sender (2) seitlich abgestrahlten Lichtsignalanteile angeordnet ist, wobei insbesondere der Referenzempfänger (34) zum Empfangen von UV-Licht ausgebildet ist.

8. Lumineszenztaster nach Anspruch 7,
dadurch **gekennzeichnet,**
daß ein insbesondere verspiegelter Reflektor (24) zum Konzentrieren der vom Sender (2) seitlich abgestrahlten Lichtsignalanteile auf den Referenzempfänger (34) vorgesehen ist, wobei insbesosndere der Reflektor (34) kegelstumpfförmig, abzughaubenförmig oder als Paraboloid ausgebildet ist, und/oder der Reflektor (34) schräg oder gekrümmt verlaufende Seitenwände (25) besitzt, die zwei sich gegenüberliegend angeordnete Öffnungen (23, 27) begrenzen, wobei eine Öffnung (23) dem Sender (2) und die andere Öffnung (27) dem Referenzempfänger (34) zugeordnet ist, die dem Sender (2) zugeordnete Öffnung (23) eine Lichteintrittsöffnung bildet, die dem Referenzempfänger (34) zugeordnete Öffnung (27) eine Empfängeraufnahmeöffnung bildet und die Lichteintrittsöffnung (23) insbesondere eine größere Querschnittsfläche aufweist als die Empfängeraufnahmeöffnung (27), und/oder der Referenzempfänger (34) innerhalb, insbesondere im wesentlichen im Brennpunkt des Reflektors (24) angeordnet ist.

9. Lumineszenztaster nach Anspruch 8,
dadurch **gekennzeichnet,**
daß der dem Sender (2) zugeordnete Tubus (9) eine seitliche Lichtaustrittsöffnung (26) aufweist und daß der Reflektor (24) so an den Tubus (9) angesetzt, insbesondere mit diesem verbunden ist, daß die Lichtaustrittsöffnung (26) des Tubus (9) im wesentlichen mit der Lichteintrittsöffnung (23) des Reflektors (24) zusammenfällt, und/oder daß der Referenzempfänger (34) an einem Substrat (29) angeordnet, insbesondere mit einer Leiterplatte verlötet ist und der Referenzempfänger (34) durch die Empfängeraufnahmeöffnung (27) in den Reflektor (24) hineinragt, wobei insbesondere die die Empfängeraufnahmeöffnung (27) begrenzenden Kanten insbesondere im wesentlichen lichtdicht an der Oberfläche des Substrats (29) anliegen.

10. Lichttaster, insbesondere nach einem der Ansprüche 1 bis 9, zur Erkennung von insbesondere lumineszierenden Gegenständen mit zumindest einem Sender (2) zum Aussenden von insbesondere im UV-Bereich liegenden Lichtsignalen in einen Überwachungsbereich, mit zumindest einem Empfänger (3) zum Empfangen der an einem im Überwachungsbereich angeordneten Gegenstand (21, 22) reflektierten Lichtsignale, mit zumindest einer Auswerteeinheit zur Auswertung der Empfangssignale, sowie mit einer optischen Einheit (20) zur insbesondere automatischen variablen Fokussierung der ausgesandten Lichtsignale auf verschiedene Punkte innerhalb des Überwachungsbereichs und/oder mit einer optischen Einheit (20) mit insbesondere automatisch verstellbarer Brennweite.

11. Lichttaster nach Anspruch 10,
dadurch **gekennzeichnet,**
daß die optische Einheit (20) als Zoom-Objektiv ausgebildet ist, und/oder daß die optische Einheit (20) als Autofokus-Objektiv ausgebildet ist, und/oder daß die optische Einheit (20) als austauschbares Objektiv ausgebildet ist, und/oder daß die Brennweite der optischen Einheit (20) diskret oder kontinuierlich verstellbar ist.
